# EUROPEAN PATENT SPECIFICATION

(11) **EP 2 578 276 B1**
(45) Date of publication and mention of the grant of the patent: **22.10.2014**
(21) Application number: 12185462.4
(22) Date of filing: 21.09.2012
(51) Int. Cl.: A63B 37/00

(54) **Method of golf ball compression molding**
Verfahren zum Golfballdruckgießen
Procédé de moulage par compression de balles de golf

(30) Priority: 21.09.2011 US 201113239046
(43) Date of publication of application: 10.04.2013
(73) Proprietor: NIKE Innovate C.V., Beaverton, OR 97005-6453 (US)
(72) Inventor: Lin, Che-Ching, Beaverton, OR Oregon 97005 (US)
(74) Representative: Grünecker, Kinkeldey, Stockmair & Schwanhäusser

(56) References cited:
- WO-A1-00/27481
- WO-A1-00/59583
- WO-A1-02/100491
- US-A- 6 054 550
- US-A1- 2002 019 273
- US-A1- 2004 232 577
- US-A1- 2006 142 096
- US-A1- 2009 036 236

## Description

### TECHNICAL FIELD

The present invention relates generally to method of making a golf ball and, more particularly, compression molding techniques for making a golf ball.

### BACKGROUND

A golfer typically selects a golf ball that has a combination of features based on his or her preferences and/or skill. In some cases, it may be desirable to form the inner core of a golf ball from a thermoplastic material. Although thermoplastic inner core layers may be formed by compression molding, in some cases it may be desirable to form thermoplastic inner core layers by injection molding. During some manufacturing processes, such as injection molding, gases within, or between, the golf ball materials may cause gas pockets (air bubbles) to form in the layers and/or between the layers of the golf ball as it is being made.

Several golf ball characteristics may be affected by air bubbles in the golf ball. Because the gases in the air bubbles are much more compressible than any of the materials used to form the golf ball, several of the properties of the golf ball may be detrimentally affected by gas pockets in the golf ball. For example, gas pockets may absorb some of the impact of the club in an undesirable way, thereby reducing the distance achievable when striking such a golf ball.

One possible cause of air bubbles may be a high moisture level of the thermoplastic material. Another possible cause of air bubbles may be related to parameters of the injection molding process. For example, air bubbles may be caused if the injection speed is too fast.

Methods have been proposed to prevent the formation of gas pockets in golf balls during manufacturing. For example, one such method includes forming a core with grooves on its outer surface. When an outer layer is molded to the core, gases between the layers are intended to escape through the grooves in order to prevent gases from being trapped between the layers and forming voids. This process, while attempting to avoid the formation of gas pockets between layers, does not address the possible formation of gas pockets within a layer.

The present disclosure is directed to improvements in golf ball molding processes.

Related prior art can, for example, be found in US 2009/036236 A1, WO 00/59583 A1, US 6 054 550 A, US 2006/142096 A1, US 2004/232577 A1, WO 02/100491 A1, US 2002/019273 A1 and WO 00/27481 A1.

US 2009/036236 A1 discloses a golf ball having a core made of a specific rubber composition and having a cover of at least three layers which is composed of a thermoplastic resin material and encases the core.

WO 00/59583 A1 discloses a golf ball core composition comprising at least one natural or synthetic rubber and at least one high Vicat softening temperature thermoplastic material.

US 6 054 550 A discloses a thread-wound golf ball that includes a core having a center ball and a rubber thread layer and a cover.

US 2006/142096 A1 discloses a golf ball being comprised of a core and a cover, wherein the core is further comprised of a fluid mass at the center of the ball.

### SUMMARY

In one aspect, the present disclosure is directed to a method of making a golf ball. The method may include forming a spherical inner core layer, forming two hemispherical shells in a compression mold, and assembling the two hemispherical shells as an outer core layer around the inner core layer. In addition, the method may include curing the two hemispherical shells to form a unitary outer core layer by compression molding the shells around the inner core layer at a temperature that causes the inner core layer to melt.

In another aspect, the present disclosure is directed to a method of making a golf ball. The method may include forming a spherical inner core layer, forming two hemispherical shells in a compression mold, and assembling the two hemispherical shells as an outer core layer around the inner core layer. In addition, the method may include curing the two hemispherical shells to form a unitary outer core layer by compression molding the shells around the inner core layer at a temperature that is at least 30°C higher than the melting point of the inner core layer material.

In another aspect, the present disclosure is directed to a golf ball. The golf ball may include a cover layer, an outer core layer disposed radially inward of the cover layer, and an inner core layer disposed radially inward of the outer core layer. The outer core layer may be formed of a material having a cure temperature that is at least 30°C higher than the melting point of the inner core layer.

Other systems, methods, features and advantages of the invention will be, or will become, apparent to one of ordinary skill in the art upon examination of the following figures and detailed description. It is intended that all such additional systems, methods, features and advantages be included within this description and this summary, be within the scope of the invention, and be protected by the following claims.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
FIG. 1 shows a cutaway, partial cross-sectional view of an exemplary golf ball in accordance with this disclosure, the golf ball being of a three-piece construction;
FIG. 2 shows a cutaway, partial cross-sectional view of an exemplary golf ball in accordance with this disclosure, having a four-piece construction;
FIG. 3 is an exploded view of an exemplary compression mold for forming outer core layer shells and curing outer core layer shells around an inner core layer;
FIG. 4 is a cross-sectional, assembled view of the mold of FIG. 3;
FIG. 5 is a cross-sectional view of an outer core layer shells as formed in the mold of FIG. 3 and an inner core layer;
FIG. 6 is a cross-sectional view of a compression mold as assembled for curing an outer core layer about an inner core layer; and
FIG. 7 is a cross-sectional view of a golf ball as formed using the compression molding process illustrated in FIG. 6.

### DETAILED DESCRIPTION

### Overview of invention

The present disclosure relates generally to a process of making a golf ball. More specifically, the present disclosure relates to a process of reducing air bubbles in an inner core layer of a golf ball.

The performance characteristics of a golf ball are determined, at least in part, by the structural configuration of the layers and/or the material compositions of the layers. The overall performance characteristics of the golf ball are affected in certain ways by the makeup of individual layers and also reflect the combination and arrangement of the layers and materials from which the golf ball is formed. The concepts discussed in the present disclosure may be applicable to golf balls having any construction, including any suitable number of layers. In some embodiments, the methods disclosed herein may be implemented to make golf balls having a three-layer construction. In other embodiments, the methods may be used to make balls having a four-layer construction. In addition, the methods may be used to make golf balls having other configurations that include five or more layers.

Further, although the disclosure describes various methods of manufacturing golf balls, a person having ordinary skill in the art will be able to adapt the disclosed concepts for use in methods of making other types of balls (other than golf balls) and for making other types of layered articles. For example, the disclosed concepts may be applicable to making any layered article, such as a projectile, recreational device, or individual components of these articles.

### 3-layer Ball Structure

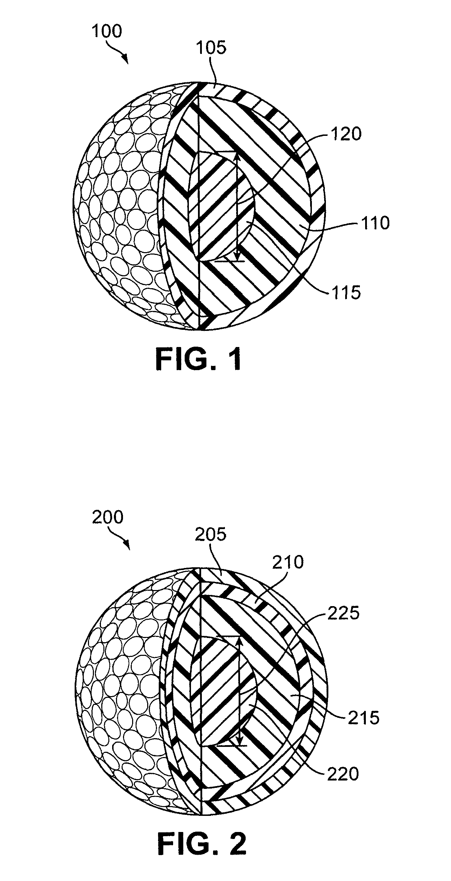

FIG. 1 illustrates a cutaway, partial cross-sectional view of an exemplary three-layer golf ball construction. As shown in FIG. 1, a golf ball 100 may include a cover layer 105, an outer core layer 110 disposed radially inward of cover layer 105, and an inner core layer 115 disposed radially inward of outer core layer 110. The dimensions and materials of each layer may be selected to achieve desired performance characteristics.

Cover layer 105 may be formed of a relatively soft but durable material. For example, cover layer 105 may be formed of a material that compresses/flexes when struck by a golf club, in order to provide spin of the ball and feel to the player. Although relatively soft, the material may also be durable, in order to withstand scuffing from the club and/or the golf course. Exemplary cover layer materials may include urethane or ionomer blends, and/or any other suitable material.

In addition, FIG. 1 illustrates the outer surface of cover layer 105 as having a generic dimple pattern. While the dimple pattern on golf ball 100 may affect the flight path of golf ball 100, any suitable dimple pattern may be used with the disclosed embodiments. In some embodiments, golf ball 100 may be provided with a dimple pattern including a total number of dimples between approximately 300 and 400.

Outer core layer 110 may be formed of a relatively firm and suitably resilient material. Outer core layer 110 may be configured to provide a relatively high launch angle and a relatively low spin rate when the ball is struck by a driver, and a relatively higher spin rate and increased control when struck with irons. This may provide distance off the tee with spin and control around the greens. Inner core layer 115 may be formed of a relatively firm material in order to provide distance.

The thickness of the golf ball layers may be varied in order to achieve desired performance characteristics. In some embodiments, inner core layer 115 may have a diameter in the range of about 19 mm to 30 mm. For example, in some embodiments, inner core layer 115 may be spherical with a diameter 120 of approximately 24 mm to 28 mm.

While the disclosed concepts may be applicable to three-piece golf balls, such as golf ball 100, for purposes of discussion, the disclosed concepts will be discussed in greater detail below with respect to a four-piece golf ball construction. It will be understood, however, that the concepts discussed above and/or below are applicable to golf balls having a three-piece construction, four-piece construction, five-piece construction, or any other suitable configuration.

### 4-Layer Ball Structure

FIG. 2 is a cutaway, partial cross-sectional view of a golf ball 200 having a four-piece construction. As shown in FIG. 2, golf ball 200 may have four layers that are positioned adjacent one another. For example, in some embodiments, golf ball 200 may include an outer cover layer 205 and an inner cover layer 210 disposed radially inward of outer cover layer 205. Golf ball 200 may also include an outer core layer 215 disposed radially inward of inner cover layer 210, and an inner core layer 220 disposed radially inward of outer core layer 215. Any layer may surround or substantially surround any layers disposed radially inward of that layer. For example, outer core layer 215 may surround or substantially surround inner core layer 220.

In the present disclosure and drawings, golf ball 200 is described and illustrated as having four layers. In some embodiments, at least one additional layer may be added. For example, in some embodiments, a mantle layer may be added between outer core layer 215 and inner cover layer 210. In some embodiments, an intermediate cover layer may be inserted between inner cover layer 210 and outer cover layer 205. Further, in some embodiments, an intermediate core layer may be inserted between inner core layer 220 and outer core layer 215. Other layers may be added on either side of any disclosed layer as desired to achieve certain performance characteristics and/or attributes.

In some embodiments, golf ball 200 may have a diameter of at least 42.67 mm (1.680 inches), in accordance with the Rules of Golf. For example, in some embodiments, golf ball 200 may have a ball diameter between about 42.67 mm and about 42.9 mm, and may, in some embodiments, have a ball diameter of about 42.7 mm. Golf ball 200 may have a ball weight between about 45 g and about 45.8 g and may, in some embodiments, have a ball weight of about 45.4 g.

The thickness of the layers of golf ball 200 may be varied in order to achieve desired performance characteristics. In some embodiments, outer cover layer 205 may have a thickness of approximately 0.5 mm to 2 mm. In addition, in some embodiments, inner cover layer 210 may have a thickness of approximately 0.5 mm to 2 mm. In some embodiments, outer cover layer 205 and/or inner cover layer 210 may have a thickness of approximately 0.8 mm to 2 mm. In some embodiments, outer cover layer 205 and/or inner cover layer 210 may have a thickness of approximately 1 mm to 1.5 mm.

In some embodiments, outer core layer 215 may have a thickness of at least about 5 mm. In some embodiments, inner core layer 220 may be a sphere having a diameter 225 in the range of approximately 21 mm to 30 mm. In some embodiments, diameter 225 of inner core layer 220 may be in the range of approximately 24 mm to 28 mm. For example, in some embodiments, diameter 225 may be 24 mm. In other embodiments, diameter 225 may be 28 mm.

### Formation of Inner Core Layer

A method of making a golf ball according to the present disclosure may include forming the spherical inner core layer. In some embodiments, the inner core layer may be formed by molding, for example, by injection molding. In some embodiments, the injection molded material may include a thermoplastic material. Steps may be taken prior to molding to ensure that the moisture level of the material is maintained under a predetermined limit.

In some embodiments, the disclosed method may include performing a drying process, including keeping the material to be used to form inner core layer 220 sealed in a moisture-resistant dryer capable of producing dry air. The drying process may include maintaining the material in a 50°C environment for approximately 2 to 24 hours. In addition, the drying process may include employing a vacuum and/or heat in order to remove moisture if moisture levels have exceeded a predetermined threshold. For example, in some embodiments, the threshold may be approximately 2,000 ppm.

Inner core layer 220 may be formed using a molding process, such as injection molding. The injection molding may be performed using an injection molding machine (not shown). For example, a thermoplastic, or other suitable material, may be injected into a spherical mold (not shown). Persons having ordinary skill in the art will be familiar with techniques and equipment for injection molding a spherical shape.

Inner core layer 220 may be injection molded at a temperature in the range of approximately 190°C to 220°C. Following the injection molding process, inner core layer 220 may be removed from the injection molding machine, and may undergo a cooling process. In some embodiments, inner core layer 220 may be cooled at an ambient temperature. In other embodiments, inner core layer 220 may be cooled in an air-conditioned environment controlled to predetermined conditions. In some cases, the cooling process may include a cooling time of any suitable duration. For example, the cooling time may be determined such that the shape of inner core layer 220 is maintained following the injection molding process. In some cases, the cooling time may be approximately 1 to 8 hours.

### Compression Molding of Outer Core Layer Shells

The outer core layer may be formed in two compression molding (vulcanization) steps. First, the outer core layer material may be placed in an outer core layer-forming mold and subjected to a first vulcanization step so as to produce a pair of semi-vulcanized hemispherical shells. After this first vulcanization step, a prefabricated inner core layers (for example, formed in the manner described above) may be placed in the hemispherical shells from one side of the compression mold and the combination may then be further combined with the hemispherical shells from the other side of the compression mold. Then the assembly of the inner core layer and the two outer core layer shells may be cured in a second vulcanization step.

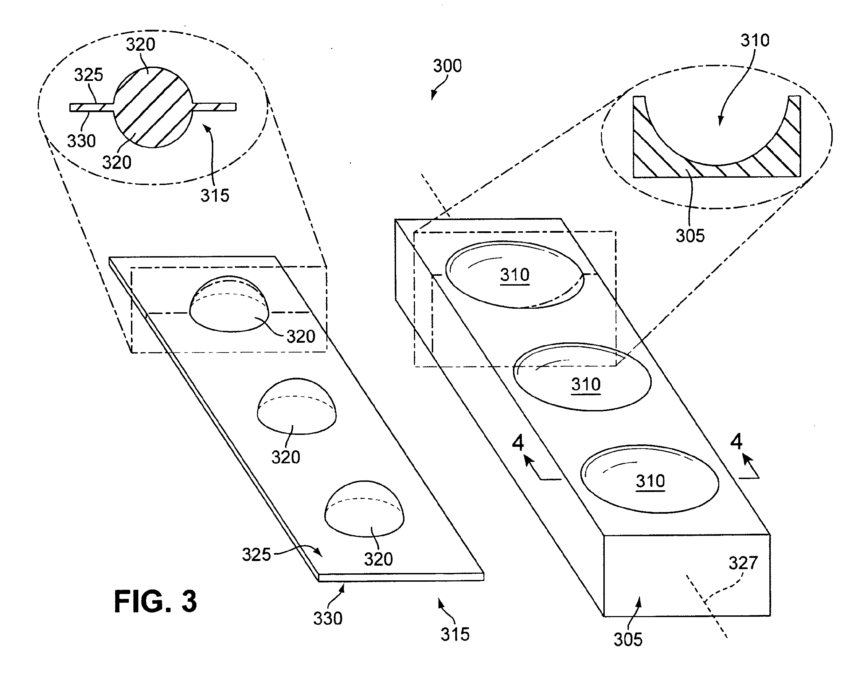

FIG. 3 is an exploded view of an exemplary compression mold 300 for forming outer core layer shells in the first vulcanization step described above, and for curing the combination of the inner core layer and the outer core layer hemispherical shells in the second vulcanization step described above. Compression mold 300 may include a bottom mold 305 having a plurality of hemispherical cavities 310, and a top mold (not shown in FIG. 3) that is substantially identical to bottom mold 305 and includes a plurality of hemispherical cavities corresponding with cavities 310 of bottom mold 305. In addition, compression mold 300 may include a middle plate 315 having a plurality of protrusions 320 extending from a top surface 325 of plate 315 and from a bottom surface 330 of plate 315. Protrusions 320 may correspond with cavities 310 in the bottom mold 305, as well as the cavities in the top mold. Compression mold 300 is shown having three cavities for purposes of illustration. The number of cavities in compression mold 300 may vary according to manufacturing considerations that will be appreciated by those having ordinary skill in the art.

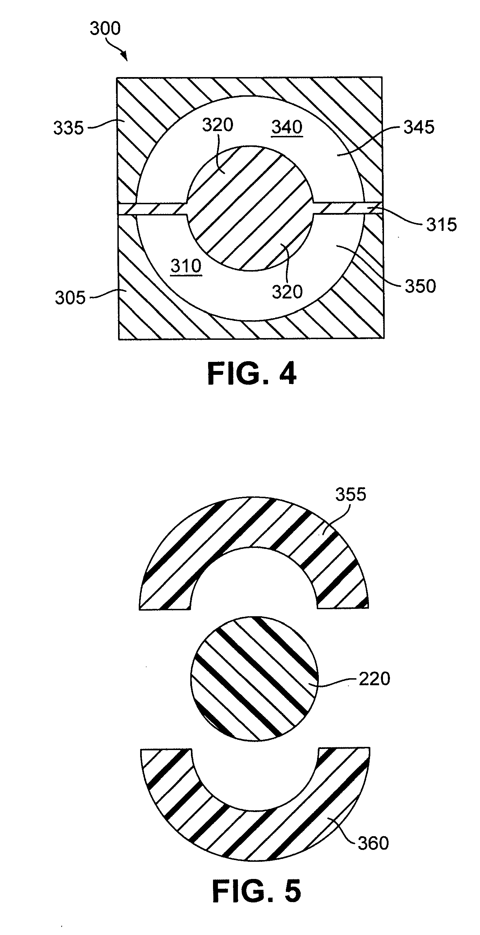

FIG. 4 is a cross-sectional view of compression mold 300 taken along longitudinal axis 327 of compression mold 300 at line 4 in FIG. 3. In FIG. 4, compression mold 300 is shown assembled. As shown in FIG. 4, middle plate 315 may be placed on top of bottom mold 305 such that protrusions 320 extend into cavities 310. In addition, a top mold 335 having cavities 340 may be placed on top of middle plate 315 such that protrusions 320 extend upward into cavities 340. Assembled in this manner, compression mold 300 may define hemispherical top voids 345 and hemispherical bottom voids 350.

Outer core layer material may be molded into hemispherical shells in hemispherical top voids 345 and hemispherical bottom voids 350. For example, FIG. 5 illustrates a cross-sectional view of a first hemispherical outer core shell 355 and a second hemispherical outer core shell 360, as respectively formed within hemispherical top void 345 and hemispherical bottom void 350 of compression mold 300. In addition, FIG. 5 also illustrates a cross-sectional view of inner core layer 220 as formed in the manner described above.

The diameter of protrusions 320 of middle plate 315 may be in the range of approximately 19 mm to 30 mm in order to form an inner shell cavity sized to accommodate the inner core layer, which may have a diameter in the range of approximately 19 mm to 30 mm, as described above. In addition, the diameter of cavities 310 of bottom mold 305 and cavities 340 of top mold 335 may be at least 38 mm. Accordingly, compression mold 300 may be configured to form hemispherical outer core layer shells that are at least 4 mm in thickness. In some embodiments, compression mold 300 may be configured to form hemispherical outer core layer shells that are at least 5 mm in thickness.

### Molding of Outer Core Layer Shells around Inner Core Layer

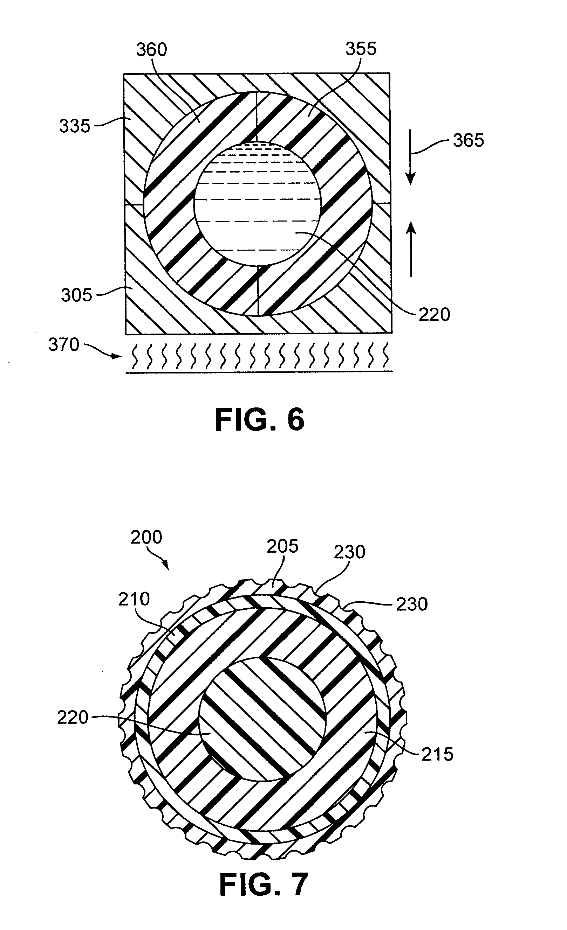

The second vulcanization step described briefly above is illustrated in FIG. 6. As shown in FIG. 6, middle plate 315 may be removed from compression mold 300 and hemispherical shells 355 and 360 may be assembled around inner core layer 220 within bottom mold 305 and top mold 335. In some embodiments, the surface of inner core layer 220 may be roughened before placement in the hemispherical shells 355 and 360 to increase adhesion between inner core layer 220 and outer core layer 215. In some embodiments, the surface of inner core layer 220 may be pre-coated with an adhesive before placing inner core layer 220 in hemispherical shells 355 and 360 in order to enhance the durability of golf ball 200 and provide increased rebound.

It will also be noted that, in some embodiments, covering inner core layer 220 with hemispherical shells 355 and 360 can be performed within compression mold 300. For example, the assembly of inner core layer 220 and hemispherical shells 355 and 360 may be made by leaving hemispherical shells 355 and 360 in cavities 340 and 310, respectively, and placing inner core layer 220 into bottom hemispherical shell 360 before replacing top mold 335 (with hemispherical shell 355 still in place within cavity 340) in place over inner core layer 220 and onto bottom mold 305. Alternatively, in some embodiments, hemispherical shells 355 and 360 can be removed from compression mold 300 first, then inner core layer 220 may be covered with hemispherical shells 355 and 360 by hand or tool, the assembled parts may be placed in cavities 310, and top mold 335 may be replaced onto bottom mold 305 over the assembled parts. When assembling the parts outside of compression mold 300, the parts may be reoriented before being placed back into compression mold 300. For example, as shown in FIG. 6, the boundary between hemispherical shells 355 and 360 may be oriented perpendicular (or at any other desired angle) to the boundary between bottom mold 305 and top mold 335.

Once the assembled parts are secured within compression mold 300, the second vulcanization step may be executed, in which pressure may be applied, as indicated by arrows 365, and heat may be applied, as indicated by wavy lines 370. Pressure may be applied in any suitable way. In addition, heat can also be applied in any suitable way, for example, via external heating elements, or heating elements incorporated into bottom mold 305 and/or top mold 335. Skilled artisans will recognize suitable ways to effectuate the conditions for vulcanization. The application of pressure and heat may result in the curing of hemispherical shells 355 and 360 to form a unitary outer core layer 215 by compression molding shells 355 and 360 around inner core layer 220.

In some embodiments, this curing of hemispherical shells 355 and 360 around inner core layer 220 may be performed at a temperature that causes inner core layer 220 to melt, as indicated by the liquid fill pattern of inner core layer 220 illustrated in FIG. 6. In some embodiments, the second vulcanization step may include curing hemispherical shells 355 and 360 to form a unitary outer core layer 215 by compression molding the shells around inner core layer 220 at a temperature that is at least 30°C higher than the melting point of the inner core layer material. Therefore, outer core layer 215 may be formed from a material having a curing temperature that is at least 30°C higher than the melting point of the inner core layer material. By causing the melting of inner core layer 220 during the second vulcanization step, any air or other gases may be allowed to escape from inner core layer 220.

Suitable conditions for the second vulcanization step may include a curing temperature of between 120°C and 190°C, and a curing time of between 5 and 20 minutes. In some embodiments, the curing temperature of outer core layer 215 may be at least 30°C higher than the melting point of the thermoplastic material of inner core layer 220. In some embodiments, the curing temperature may be at least about 140°C to obtain the desired rubber crosslinked body and to cause the inner core layer to melt during the vulcanization process. For example, in some embodiments, the curing temperature may be approximately 140°C.

In some embodiments, it may be desirable to provide outer core layer 215 with a thickness suitable to prevent deformation of inner core layer 220 during post-curing handling when inner core layer 220 may be in a melted or partially melted state. In some embodiments, outer core layer 215 may have a thickness of at least 5 mm in order to provide protection to inner core layer 220 during manufacturing.

### Materials of Outer Core Layer

Outer core layer 215 may be formed of a thermoset material. For example, in some embodiments, outer core layer 215 may be formed by crosslinking a polybutadiene rubber composition. When other rubber is used in combination with a polybutadiene, polybutadiene may be included as a principal component. For example, a proportion of polybutadiene in the entire base rubber may be equal to or greater than 50% by weight and, in some embodiments, may be equal to or greater than 80% by weight. In some embodiments, outer core layer 215 may be formed of a polybutadiene rubber composition including a polybutadiene having a proportion of cis-1,4 bonds of equal to or greater than 60 mol %. For example, in some embodiments, the proportion may be equal to or greater than 80 mol %.

In some embodiments, cis-1,4-polybutadiene may be used as the base rubber and mixed with other ingredients. In some embodiments, the amount of cis-1,4-polybutadiene may be at least 50 parts by weight, based on 100 parts by weight of the rubber compound. Various additives may be added to the base rubber to form a compound. The additives may include a cross-linking agent and a filler. In some embodiments, the cross-linking agent may be zinc diacrylate, magnesium acrylate, zinc methacrylate, or magnesium methacrylate. In some embodiments, zinc diacrylate may provide advantageous resilience properties.

In some embodiments, the filler may include zinc oxide, barium sulfate, calcium carbonate, or magnesium carbonate. In some embodiments, zinc oxide may be selected for its advantageous properties. In some embodiments, the filler may be used to increase the specific gravity of the material. For example, metal powder, such as tungsten, may alternatively be used as a filler to achieve a desired specific gravity. In some embodiments, the specific gravity of outer core layer 215 may be in the range of about 1.05 g/cm^3 to about 1.35 g/cm^3.

In some embodiments, a polybutadiene synthesized using a rare earth element catalyst is preferred. Using this polybutadiene may provide golf ball 200 with increased resilience. Examples of rare earth element catalysts include lanthanum series rare earth element compound, organoaluminum compound, and almoxane and halogen containing compound. A lanthanum series rare earth element compound is preferred. Polybutadiene obtained by using lanthanum rare earth-based catalysts usually employ a combination of a lanthanum rare earth (atomic number of 57 to 71) compound, but particularly preferred is a neodymium compound.

In some embodiments, the polybutadiene rubber composition may comprise at least from about 0.5 parts by weight to about 5 parts by weight of a halogenated organosulfur compound. In some embodiments, the polybutadiene rubber composition may comprise at least from about 1 part by weight to about 4 parts by weight of a halogenated organosulfur compound. The halogenated organosulfur compound may be selected from the group consisting of pentachlorothiophenol; 2-chlorothiophenol; 3-chlorothiophenol; 4-chlorothiophenol; 2,3-chlorothiophenol; 2,4-chlorothiophenol; 3,4-chlorothiophenol; 3,5-chlorothiophenol; 2,3,4-chlorothiophenol; 3,4,5-chlorothiophenol; 2,3,4,5-tetrachlorothiophenol; 2,3,5,6-tetrachlorothiophenol; pentafluorothiophenol; 2-fluorothiophenol; 3-fluorothiophenol; 4-fluorothiophenol; 2,3-fluorothiophenol; 2,4-fluorothiophenol; 3,4-fluorothiophenol; 3,5-fluorothiophenol 2,3,4-fluorothiophenol; 3,4,5-fluorothiophenol; 2,3,4,5-tetrafluorothiophenol; 2,3,5,6-tetrafluorothiophenol; 4-chlorotetrafluorothiophenol; pentaiodothiophenol; 2-iodothiophenol; 3-iodothiophenol; 4-iodothiophenol; 2,3-iodothiophenol; 2,4-iodothiophenol; 3,4-iodothiophenol; 3,5-iodothiophenol; 2,3,4-iodothiophenol; 3,4,5-iodothiophenol; 2,3,4,5-tetraiodothiophenol; 2,3,5,6-tetraiodothiophenol; pentabromothiophenol; 2-bromothiophenol; 3-bromothiophenol 4-bromothiophenol; 2,3-bromothiophenol; 2,4-bromothiophenol; 3,4-bromothiophenol; 3,5-bromothiophenol; 2,3,4-bromothiophenol; 3,4,5-bromothiophenol; 2,3,4,5-tetrabromothiophenol; 2,3,5,6-tetrabromothiophenol; and their zinc salts, the metal salts thereof and mixtures thereof.

### Materials of Inner Core Layer

The process of the present disclosure is suitable for any thermoplastic material having a melting point of less than 120°C. In some embodiments, suitable thermoplastic materials may include, for example, an ionomer resin, such as Surlyn, produced by E. I. Dupont de Nemous and Company. In some embodiments, the inner core layer may be formed from a highly neutralized acid polymer composition. Exemplary highly neutralized acid polymer compositions suitable for forming the inner core layer may include, for example, HPF resins such as HPF1000, HPF2000, HPF AD1024, HPF AD1027, HPF AD1030, HPF AD1035, HPF AD1040, all produced by E. I. Dupont de Nemous and Company.

The acid polymer may be neutralized to 80% or higher, including up to 100%, with a suitable cation source, such as magnesium, sodium, zinc, or potassium. Suitable highly neutralized acid polymer compositions for use in forming the inner core layer may include a highly neutralized acid polymer composition and optionally additives, fillers, and/or melt flow modifiers.

Suitable additives and fillers may include, for example, blowing and foaming agents, optical brighteners, coloring agents, fluorescent agents, whitening agents, UV absorbers, light stabilizers, defoaming agents, processing aids, antioxidants, stabilizers, softening agents, fragrance components, plasticizers, impact modifiers, acid copolymer wax, surfactants. In some embodiments, the additives and fillers may include, for example, inorganic fillers, such as zinc oxide, titanium dioxide, tin oxide, calcium oxide, magnesium oxide, barium sulfate, zinc sulfate, calcium carbonate, zinc carbonate, barium carbonate, mica, talc, clay, silica, lead silicate, and other types of organic fillers. In some embodiments, the additives and fillers may include, for example, high specific gravity metal powder fillers, such as tungsten powder, molybdenum powder, and others. In some embodiments the additives and fillers may include regrind, that is, core material that is ground and recycled.

Any suitable melt flow modifiers may be included in the highly neutralized acid polymer composition. Exemplary suitable melt flow modifiers may include, for example, fatty acids and salts thereof, polyamides, polyesters, polyacrylates, polyurethanes, polyethers, polyureas, polyhydric alcohols, and combinations thereof.

The inner core layer may be formed by any suitable process, such as injection molding or compression molding. During an exemplary injection molding process of forming the inner core layer, the temperature of the injection machine may be set in a range of approximately 190°C to 220°C.

### Examples

Testing was conducted to study the effectiveness of the disclosed methods of golf ball manufacturing in preventing formation of air bubbles within inner core layers as compared to other methods. In the testing, 100 inner core layers made from 100% HPF 2000 were produced, and then divided into two groups, each of 50 samples. The inner core layers each had a diameter of 24 mm.

Outer core layers were made from compound A, the composition of which is set forth in the following Table I.

**Table I**

| Rubber Compound | A |
|---|---|
| TAIPOL BR0150* | 100 |
| Zinc acrylate | 26 |
| Zinc oxide | 4.5 |
| Barium sulfate | 32 |
| Peroxide | 1 |
| *TAIPOL BR0150 is the trade name of rubber by Taiwan Synthetic Rubber Corp. | |

As illustrated in Table I, Rubber Compound A is formed of TAIPOL BR0150 as a base rubber, with zinc acrylate, zinc oxide, barium sulfate, and peroxide included as fillers and additives. The fillers and additives were included in the amounts listed (in pounds per hundred pounds of TAIPOL BR0150).

The testing of the two groups of 50 was performed as follows. For test Group A, 50 pieces of inner core layer were subjected to the vulcanization processes discussed above (performing the second vulcanization step to cure the outer core layer shells around the inner core layer at a temperature that is at least 30°C higher than the melting point of the inner core layer). For test Group B, the inner core layers were not subjected to further processing after initial injection molding. Each of the 100 pieces was cut open to check for any voids (air bubbles) in the cut surface of the inner core layer. None of the 50 pieces in Group A had any air bubbles. In contrast, of the 50 pieces in Group B, six pieces were determined to have air bubbles. (Note: for Group B, if the inner core layer was transparent enough, no cutting was necessary, as the pieces could be merely checked under light.)

### Cover Layers

FIG. 7 illustrates a completed golf ball 200, including outer core layer 215 as fully cured in the vulcanization process discussed above. As shown in FIG. 7, one or more cover layers may be molded to enclose outer core layer 215.

As shown in FIG. 7, golf ball 200 may include outer cover layer 205 and inner cover layer 210. FIG. 7 also shows dimples 230 which may be formed in outer cover layer 205. As noted above, dimples 230 may have any suitable configuration.

In some embodiments, cover layers may be formed from a thermoplastic or thermoset material. For example, in some embodiments, inner cover layer 210 and/or outer cover layer 205 may be made from a thermoplastic material including at least one of an ionomer resin, a highly neutralized acid polymer composition, a polyamide resin, a polyester resin, and a polyurethane resin. In some embodiments, an ionomer resin, polyurethane resin, or highly neutralized acid polymer composition may be more preferred for inner cover layer 210 or outer cover layer 205. In some embodiments, inner cover layer 210 may be formed of the same type of material as outer cover layer 205. In other embodiments, inner cover layer 210 may be formed of a different type of material from outer cover layer 205.

## Claims

1. A method of making a golf ball, comprising:
forming a spherical inner core layer (115, 220);
forming two hemispherical shells (355, 360) in a compression mold;
assembling the two hemispherical shells (355, 360) as an outer core layer (110, 215) around the inner core layer (115, 220);
**characterized in that** the method further comprises:
curing the two hemispherical shells (355, 360) to form a unitary core layer by compression molding the shells around the inner core layer (115, 220) at a temperature that causes the inner core layer (115, 220) to melt.

2. The method of claim 1,
wherein the temperature is at least 30°C higher than the melting point of the inner core layer material.

3. The method of one of the preceding claims, wherein forming the inner core layer (115, 220) includes molding a thermoplastic.

4. The method of one of the preceding claims, wherein the thermoplastic is a highly neutralized acid polymer composition.

5. The method of one of the preceding claims, wherein the forming of the inner core layer (115, 220) includes injection molding the inner core layer.

6. The method of claim 5, wherein the inner core layer (115, 220) is having a diameter in the range of approximately 21 mm to 30 mm.

7. The method of one of the preceding claims, wherein the outer core layer (110, 215) includes polybutadiene rubber.

8. The method of claim 7, wherein the outer core layer (110, 215) has a thickness of at least 4 mm.

9. The method of one of the preceding claims, wherein the compression molding includes vulcanizing the outer core layer (110, 215) at a curing temperature between approximately 120°C and 190°C for a time period in the range of approximately 5 to 20 minutes.

10. The method of one of claims 1 to 8, including performing the curing of the two hemispherical shells (355, 360) at approximately 140°C.

11. A golf ball, comprising:
a cover layer (105, 210);
an outer core layer (110, 215) disposed radially inward of the cover layer (210); and
an inner core layer (115, 220) disposed radially inward of the outer core layer (110, 215);
**characterized in that**
the outer core layer (110, 215) is formed of a material having a cure temperature that is at least 30°C higher than the melting point of the inner core layer (115, 220).

12. The golf ball according to claim 11, wherein the inner core layer (115, 220) is formed of a thermoplastic.

13. The golf ball of one of the preceding claims, wherein the thermoplastic is a highly neutralized acid polymer composition.

14. The golf ball of one of the preceding claims, wherein the inner core layer (115, 220) is injection molded.

15. The golf ball of one of the preceding claims, wherein the outer core layer (110, 215) includes polybutadiene rubber.

## Patentansprüche

1. Verfahren zum Herstellen eines Golfballs, das umfasst:
Ausbilden einer kugelförmigen inneren Kernschicht (115, 220);
Ausbilden zweier halbkugelförmiger Schalen (355, 360) in einer Pressform;
Zusammensetzen der zwei halbkugelförmigen Schalen (355, 360) zu einer äußeren Kernschicht (110, 215) um die innere Kernschicht (115, 220) herum;
**dadurch gekennzeichnet, dass** das Verfahren des Weiteren umfasst:
Aushärten der zwei halbkugelförmigen Schalen (355, 360) zum Ausbilden einer aus einem Stück bestehenden Kernschicht durch Druckformen der Schalen um die innere Kernschicht (115, 220) herum bei einer Temperatur, durch die die innere Kernschicht (115, 220) zum Schmelzen gebracht wird.

2. Verfahren nach Anspruch 1,
wobei die Temperatur wenigstens 30°C über dem Schmelzpunkt des Materials der inneren Kernschicht liegt.

3. Verfahren nach einem der vorangehenden Ansprüche, wobei Ausbilden der inneren Kernschicht (115, 220) Formen eines Thermoplasts einschließt.

4. Verfahren nach einem der vorangehenden Ansprüche, wobei der Thermoplast eine stark neutralisierte Säurepolymer-Zusammensetzung ist.

5. Verfahren nach einem der vorangehenden Ansprüche, wobei das Ausbilden der inneren Kernschicht (115, 220) Spritzgießen der inneren Kernschicht einschließt.

6. Verfahren nach Anspruch 5, wobei die innere Kernschicht (115, 220) einen Durchmesser im Bereich von ungefähr 21 mm bis 30 mm hat.

7. Verfahren nach einem der vorangehenden Ansprüche, wobei die äußere Kernschicht (110, 215) Polybutadien-Kautschuk enthält.

8. Verfahren nach Anspruch 7, wobei die äußere Kernschicht (110, 215) eine Dicke von wenigstens 4 mm hat.

9. Verfahren nach einem der vorangehenden Ansprüche, wobei das Druckformen Vulkanisieren der äußeren Kernschicht (110, 215) bei einer Vulkanisationstemperatur zwischen ungefähr 120°C und 190°C über einen Zeitraum im Bereich von ungefähr 5 bis 20 Minuten einschließt.

10. Verfahren nach einem der Ansprüche 1 bis 8, das Durchführen des Aushärtens der zwei halbkugelförmigen Schalen (355, 360) bei ungefähr 140°C einschließt.

11. Golfball, der umfasst:
eine Deckschicht (105, 210);
eine äußere Kernschicht (110, 215), die radial innerhalb der Deckschicht (210) angeordnet ist; und
eine innere Kernschicht (115, 220), die radial innerhalb der äußeren Kernschicht (110, 215) angeordnet ist;
**dadurch gekennzeichnet, dass**
die äußere Kernschicht (110, 215) aus einem Material besteht, das eine Aushärttemperatur hat, die wenigstens 30°C über dem Schmelzpunkt der inneren Kernschicht (115, 220) liegt.

12. Golfball nach Anspruch 11, wobei die innere Kernschicht (115, 220) aus einem Thermoplast besteht.

13. Golfball nach einem der vorangehenden Ansprüche, wobei der Thermoplast eine stark neutralisierte Säurepolymer-Zusammensetzung ist.

14. Golfball nach einem der vorangehenden Ansprüche, wobei die innere Kernschicht (115, 220) spritzgegossen ist.

15. Golfball nach einem der vorangehenden Ansprüche, wobei die äußere Kernschicht (110, 215) Polybutadien-Kautschuk enthält.

## Revendications

1. Procédé de fabrication d'une balle de golf, comprenant :
la formation d'une couche de noyau interne sphérique (115, 220) ;
la formation de deux coques hémisphériques (355, 360) dans un moule de compression ;
l'assemblage des deux coques hémisphériques (355, 360) sous forme d'une couche de noyau externe (110, 215) autour de la couche de noyau interne (115, 220) ;
**caractérisé en ce que** le procédé comprend en outre :
le durcissement des deux coques hémisphériques (355, 360) pour former une couche de noyau unitaire en moulant les coques par compression autour de la couche de noyau interne (115, 220) à une température qui provoque la fusion de la couche de noyau interne (115, 220).

2. Procédé selon la revendication 1,
dans lequel la température est au moins 30 °C plus élevée que le point de fusion du matériau de la couche de noyau interne.

3. Procédé selon l'une des revendications précédentes, dans lequel la formation de la couche de noyau interne (115, 220) comprend le moulage d'un thermoplastique.

4. Procédé selon l'une des revendications précédentes, dans lequel le thermoplastique est une composition polymère acide fortement neutralisée.

5. Procédé selon l'une des revendications précédentes, dans lequel la formation de la couche de noyau interne (115, 220) comprend le moulage par injection d'une couche de noyau interne.

6. Procédé selon la revendication 5, dans lequel la couche de noyau interne (115, 220) présente un diamètre compris approximativement entre 21 mm et 30 mm.

7. Procédé selon l'une des revendications précédentes, dans lequel la couche de noyau externe (110, 215) comprend un caoutchouc polybutadiène.

8. Procédé selon la revendication 7, dans lequel la couche de noyau externe (110, 215) présente une épaisseur d'au moins 4 mm.

9. Procédé selon l'une des revendications précédentes, dans lequel le moulage par compression comprend la vulcanisation de la couche de noyau externe (110, 215) à une température de durcissement comprise entre approximativement 120 °C et 190 °C durant une période comprise entre approximativement 5 et 20 minutes.

10. Procédé selon l'une des revendications 1 à 8, comprenant la mise en oeuvre du durcissement des deux coques hémisphériques (355, 360) à approximativement 140 °C.

11. Balle de golf comprenant :
une couche d'enveloppe (105, 210) ;
une couche de noyau externe (110, 215) agencée radialement vers l'intérieur de la couche d'enveloppe (210) ; et
une couche de noyau interne (115, 220) agencée radialement vers l'intérieur de la couche de noyau externe (110, 215) ;
**caractérisée**
**en ce que** la couche de noyau externe (110, 215) est constituée d'un matériau présentant une température de durcissement qui est au moins 30 °C plus élevée que le point de fusion de la couche de noyau interne (115, 220).

12. Balle de golf selon la revendication 11, dans laquelle la couche de noyau interne (115, 220) est constituée d'un thermoplastique.

13. Balle de golf selon l'une des revendications précédentes, dans laquelle le thermoplastique est une composition polymère acide fortement neutralisée.

14. Balle de golf selon l'une des revendications précédentes, dans laquelle la couche de noyau interne (115, 220) est moulée par injection.

15. Balle de golf selon l'une des revendications précédentes, dans laquelle la couche de noyau externe (110, 215) comprend un caoutchouc polybutadiène.
